# EUROPÄISCHE PATENTSCHRIFT

(11) **EP 1 935 805 B1**
(45) Veröffentlichungstag und Bekanntmachung des Hinweises auf die Patenterteilung: **29.04.2009**
(21) Anmeldenummer: 07450229.5
(22) Anmeldetag: 06.12.2007
(51) Int. Cl.: B65D 77/20

(54) **Deckel mit oberflächenrauer Bedruckung**
Cover with a raw surface imprint
Couvercle avec impression à surface rugueuse

(30) Priorität: 18.12.2006 AT 8792006 U
(43) Veröffentlichungstag der Anmeldung: 25.06.2008
(73) Patentinhaber: TEICH AKTIENGESELLSCHAFT, 3200 Weinburg (AT)
(72) Erfinder: Buchinger, Christian, 3100 St. Pölten (AT); Brandstätter, Bernhard, 3100 St. Pölten (AT)
(74) Vertreter: Dungler, Karin

(56) Entgegenhaltungen:
- EP-A- 0 514 803
- EP-A- 0 798 108
- EP-A- 1 010 641
- EP-A- 1 340 694
- WO-A-01/74685
- US-A1- 2001 048 178

## Beschreibung

Die Erfindung betrifft einen Deckel zum Verschließen von Behältern mittels einer Siegelnaht, wobei der Deckel ein Trägermaterial, eine mit Bezug auf den Behälter nach außen weisende Bedruckung sowie eine mit Bezug auf den Behälter nach innen weisende Siegelschicht, welche eine Coextrusionsbeschichtung ist, umfasst.

Es ist bekannt, Behälter wie Joghurtbecher mit Deckeln zu verschließen, wobei nach außen eine für den Konsumenten informative bzw. dekorative Bedruckung vorgesehen ist. Durch die Maßnahme einer an der dem Behälter zugewandten Seite angebrachten Siegellackschicht wird eine luftdichte, aber gleichzeitig peelfähige Verbindung zwischen dem Behälter und dem Deckel ausgebildet.

Zur Herstellung dieser Deckel wird das Trägermaterial, beispielsweise Aluminium, in Form von Rollenware eingesetzt, welches kontinuierlich mit einer Heißsiegellackschicht und einem Druckbild versehen wird. Aus diesem Materialverbund werden anschließend Deckel ausgestanzt, welche in Stapeln gelagert werden. Da diese Deckel beidseitig eine glatte Oberfläche aufweisen, kommt es zu Problemen beim Entstapeln. Die Deckel haften nämlich so stark aneinander, dass zwei oder mehrere Deckel gleichzeitig entstapelt werden und somit der Abpackprozess wesentlich verzögert wird.

Um nunmehr diesen unerwünschten Effekt zu vermeiden, hat man den bedruckten Materialverbund vor dem Stanzverfahren einem Prägeschritt unterworfen. Dadurch werden oberflächenraue Verbunde erzeugt, welche leicht entstapelt werden, da bedingt durch die zwischen den Prägestegen eingeschlossene Luft ein Anhaften der Deckel aneinander verhindert wird. Allerdings zeigt der Prägevorgang den Nachteil, dass das Druckbild verzerrt oder sogar zerstört wird.

Gemäß der WO 98/26931 wird daher vorgeschlagen, die Heißsiegellackschicht mit geometrisch angeordneten Abstandshaltern auszustatten, sodass die zwischen den Abstandshaltern eingeschlossene Luft das Aneinanderhaften der Deckel im Stapel verhindert.

Auf Kundenwunsch wird jedoch oftmals an Stelle einer Heißsiegellackschicht eine siegelfähige Coextrusionsbeschichtung gewünscht. In derartigen Fällen ist es allerdings schwierig, diese Coextrusionsbeschichtung mit Abstandshaltern auszustatten. Die oberflächliche Prägung, wie in der EP-A-514 803 vorgeschlagen, zeigt bekannte Nachteile, welche unter anderem auch darin liegen, dass das Prägemuster durch den angewendeten Prägedruck in unerwünschter Weise auf die mit dem informativen Aufdruck versehene "Schönseite" des Deckels durchschlägt. Die Herstellung eines oberflächenrauen Aufdruckes, wie in der WO 98/26831 vorgeschlagen, auf der Coextrusionsbeschichtung ist jedoch auf Grund von Haftungsproblemen zwischen dem Drucklack einerseits und der siegelfähigen Schicht der Coextrusionsbeschichtung anderseits schwierig.

Aufgabe der Erfindung ist es nun, diese bekannten Nachteile zu vermeiden und gleichzeitig leicht handhabbare Deckel für das Verschließen von Behältern mit einer Siegelnaht bereit zu stellen.

Erfindungsgemäß wird ein Deckel nach Anspruch 1 vorgeschlagen.

Weitere vorteilhafte Ausgestaltungen des erfindungsgemäßen Deckels sind gemäß Unteransprüche offenbart.

Die Erfindung wird im Folgenden an Hand möglicher Ausführungsformen der Erfindung näher erläutert, wobei.Fig. 1 einen möglichen Schichtaufbau des erfindungsgemäßen Deckels 1, Fig. 2 die Verwendung dieses Deckels beim Verschließen von Behältern 2, Fig. 3 bis 5 mögliche Ausgestaltungen der oberflächenrauen Bedruckung sowie Fig. 6 bis 8 mögliche Ausführungsformen des erfindungsgemäßen Deckels 1 mit möglichen Varianten hinsichtlich oberflächenrauer Bedruckung zeigen.

Ein mögliches Verfahren zur Herstellung des erfindungsgemäßen Deckels 1 besteht nunmehr darin, das Trägermaterial 3 mit einer Coextrusionsbeschichtung 4 zu beaufschlagen und anschließend mit einer oberflächenrauen Bedruckung 5 auszustatten.

Als Trägermaterial 3 wird beispielsweise Aluminium mit einer Schichtdicke im Bereich von 10 bis 70 µm eingesetzt. Dabei weist das Aluminium vorteilhafterweise eine Zugfestigkeit von 60 bis 250 N/mm² auf.

Des Weiteren ist es möglich als Trägermaterial 3 Kunststoffe, vorzugsweise Polyester einzusetzen, wobei die Polyesterlage eine Schichtdicke von zwischen 10 bis 36 µm aufweist.

Ebenso ist es möglich als Trägermaterial 3 einen Verbund einzusetzen. In der folgenden Auflistung sind beispielhafte Verbundstrukturen sowie mögliche Schichtdicken der Einzellagen angeführt:

| Verbund | Schichtdicke | |
|---|---|---|
| Aluminium/Polyester | Aluminium bevorzugt | 10µm - 30µm, |
| | Polyester bevorzugt | 12µm - 36µm |
| | | |
| Aluminium/Polyethylen | Aluminium bevorzugt | 10µm - 30µm, |
| | Polyethylen bevorzugt | 18µm - 40µm |
| | | |
| Aluminium/Polypropylen | Aluminium bevorzugt | 10µm - 30µm, |
| | Polypropylen bevorzugt | 18µm - 40µm |
| | | |
| Aluminium/Polystyrol | Aluminium bevorzugt | 10µm - 30µm, |
| | Polystyrol bevorzugt | 18µm - 40µm |
| | | |
| Aluminium/Papier | Aluminium bevorzugt | 10µm - 30µm, |
| | Papier | 10g/m² - 70g/m² |
| | | |
| Aluminium/Aluminium | Aluminium bevorzugt | 10µm - 30µm, |

Auf das Trägermaterial 3 wird beispielsweise durch Co-Extrusionsbeschichten eine Haftvermittlerschicht 6 sowie eine Siegelschicht 7 aufgetragen. Dabei wird der Auftrag des Haftvermittlers beispielsweise Polypropylen derart gesteuert, dass die Haftvermittlerschicht 6 ein Flächengewicht in einem Bereich von 3 - 20g/m² aufweist. Der Auftrag für die Siegelschicht 7 wird derart gesteuert, dass ein Flächengewicht in einem Bereich von 15 - 50 g/m² eingestellt wird. Bevorzugte Materialien für die Siegelschicht sind Polyolefine, wie Polypropylen und Polyethylen sowie Polystyrol.

An der anderen Seite des Trägermaterials 3 wird nunmehr ein Druckvorlack 8 aufgebraucht, um die ausreichende Haftung zwischen dem Trägermaterial 3 und dem Drucklack 9 zu gewährleisten. Mit dem Drucklack 9 wird ein für den Verbraucher informelles bzw. dekoratives Druckbild erzeugt. Die oberflächenraue Bedruckung 5 wird durch Bedrucken, beispielsweise in Form geometrisch angeordneter Abstandshalter 10 gebildet.

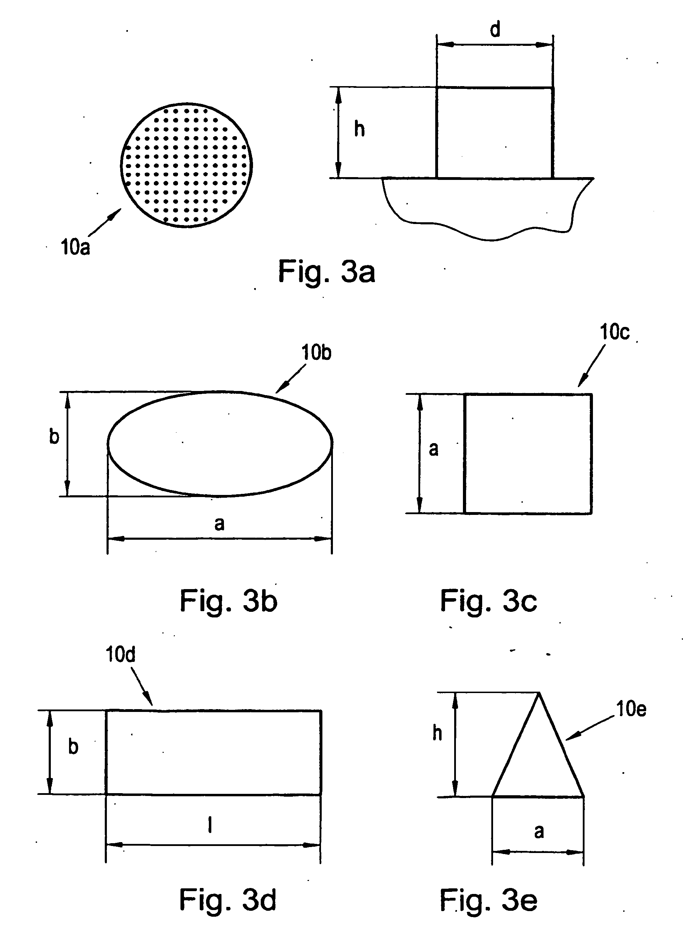

Form und Höhe der geometrischen Abstandshalter 10 können, wie in Fig. 3 gezeigt, durch entsprechende Ausgestaltung der Oberfläche der für das Bedrucken eingesetzten Medien, wie Druckwalzen, vielfach variiert werden.

Gemäß Variante nach Fig. 3a sind die Abstandshalter 10a punktförmig ausgestaltet. Die Höhenabmessungen der Abstandshalter liegen in einem Bereich von 1 bis 100 µm, vorzugsweise 20 bis 50 µm. Der Durchmesser beträgt 0,2 bis 30 mm, vorzugsweise 1 bis 3 mm. Die punktförmigen geometrischen Abstandshalter 10a können zusätzlich, wie in Fig. 3a gezeigt, an ihrer Oberfläche eine zusätzliche Strukturierung, beispielsweise auch in Form von Punkten, aufweisen.

Weitere Ausgestaltungen der Abstandshalter 10 sind gemäß Fig. 3b bis 3e gezeigt, wobei geometrische Formen, wie beispielsweise gemäß Fig. 3b eine ellipsoide Form 10b, gemäß Fig. 3c ein Quadrat 10c und gemäß Fig. 3d ein Rechteck 10d möglich sind. Ebenso ist es möglich, die Abstandshalter, wie in Fig. 3e gezeigt, in Form eines Dreieckes 10e auszugestalten.

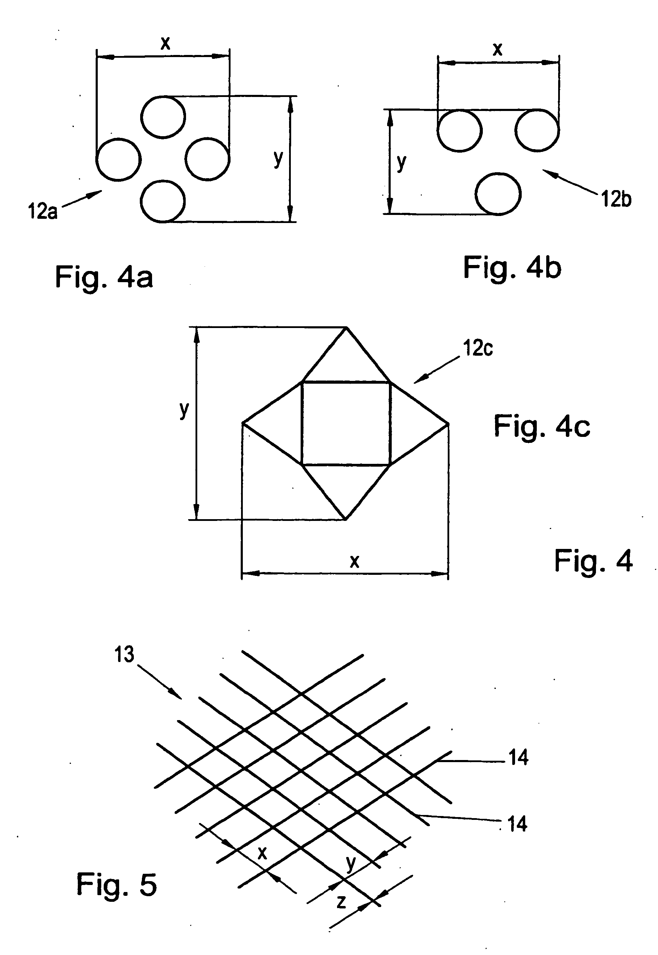

Weiters ist es denkbar, Gruppen von geometrischen Abstandshaltern, siehe dazu Fig. 4a bis 4c vorzusehen, wobei gemäß Fig. 4a die Abstandshaltergruppe 12a aus einer Aneinanderreihung von Punkten in Form eines Quadrates besteht. Gemäß Fig. 4b weist die Abstandshaltergruppe 12b die Form eines Dreieckes auf. Gemäß Fig. 4c wird ein sternförmiges Motiv 12c gezeigt, welches aus einer Aneinanderreihung eines Quadrates mit jeweils vier Dreiecken besteht.

Eine weitere mögliche Ausgestaltung für die oberflächenraue Bedruckung 5 ist in Form eines Rasters 13 in Fig. 5 gezeigt. Dieses Raster 13 wird aus längs sowie quer verlaufenden Linien 14 gebildet, welche für sich wiederum so dimensioniert sind, dass insgesamt Oberflächenrauigkeit erzielt wird.

Zur Bereitstellung der vorgenannten Ausführungsformen für die oberflächenraue Bedruckung 5 werden die Druckmedien, wie Druckwalzenoberflächen derart ausgestaltet, dass die Dimensionierungen a, b, h, y sowie d in einem Bereich von 0,2 bis 30 mm, die Dimensionierungen a, 1, x in einem Bereich von 0,2 bis 30 mm liegen. Die dadurch erzeugte Oberflächenrauigkeit liegt in einem Bereich von 1 bis 100 µm, vorzugsweise in einem Bereich von 20 bis 50 µm. Bei einer Oberflächenrauigkeit von 20 bis 50 µm lassen sich die erfindungsgemäßen Deckel 1 nach ihrer Lagerung in Stapeln besonders einfach und rasch entstapeln.

Liegt die oberflächenraue Bedruckung 5 in Form einer Rasters 13, wie in Fig. 5 gezeigt, vor, so liegen die Abstände der Linien x, y in einem Bereich von 2 bis 15 mm. Die Breite der Linien z beträgt vorzugsweise 0,3 bis 5 mm. Die Höhe der Linien h liegt, um die Entstapelung zu ermöglichen, in einem Bereich von 1 bis 100 um, vorzugsweise in einem Bereich von 20 bis 50 µm.

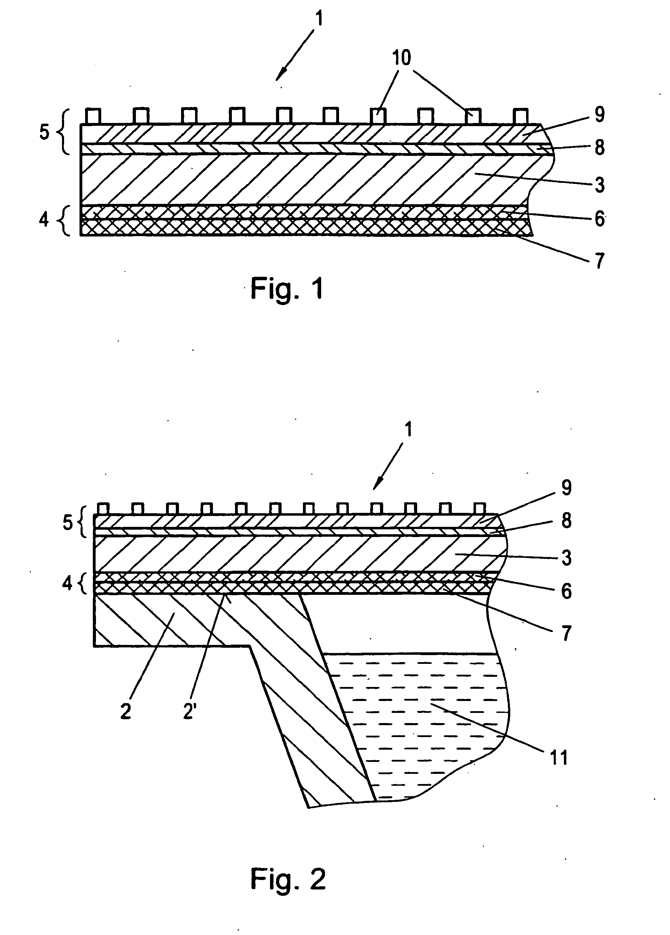

Nach dem Bedrucken wird das in Fig. 1 gezeigte Verbundmaterial in die entsprechende Deckelform gestanzt, sodass eine Verwendung, wie in Fig. 2 dargestellt, möglich wird. Die Verwendung erfolgt derart, dass der erfindungsgemäße Deckels 1 aufgrund der Siegelschicht 7 in der Coextrusionsbeschichtung 4 im Randbereich 2' des Behälters 2, welcher beispielsweise mit Joghurt 11 befüllt ist, aufgesiegelt wird, wodurch ein Verschluss in Form einer Siegelnaht 16 entsteht. Durch die Wahl des Siegelwerkzeuges, des Siegeldruckes und der Siegeltemperatur kann die Festigkeit der Siegelnaht 16 eingestellt werden.

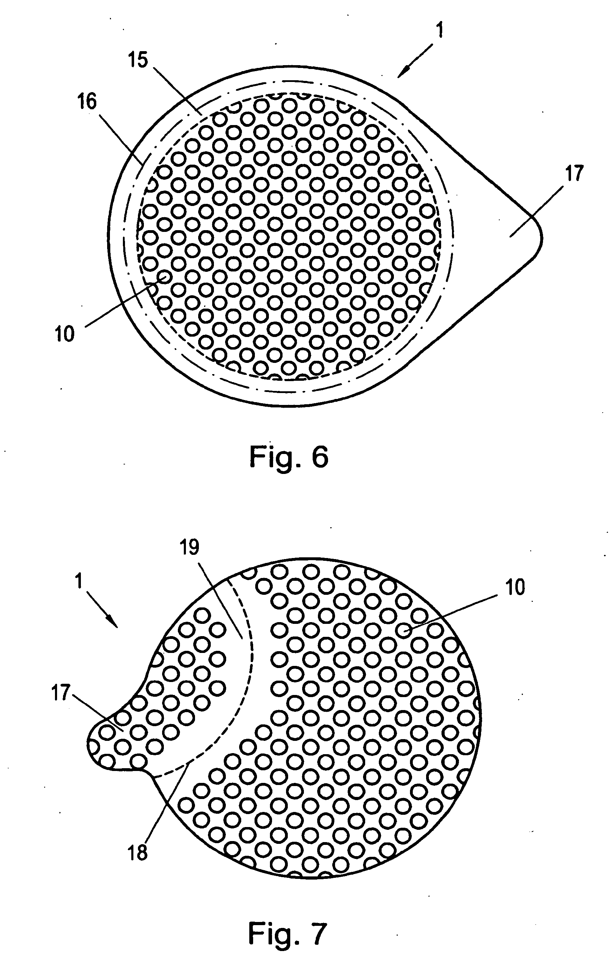

Eine besonders hohe Festigkeit der Siegelnaht 16 kann - wie in Fig. 6 gezeigt - dann erzeugt werden, wenn die oberflächenraue Bedruckung 5 im Bereich 15 des Deckels, d.h. im Bereich der Siegelnaht 16 ausgespart ist. Dadurch greift das Siegelwerkzeug passgenau an der Oberfläche des Deckels 1 an, sodass ein einwandfreier Verschluss zwischen Deckel 1 und Behälter 2 erzeugt wird. Da nunmehr diese Siegelnahtfestigkeit relativ hoch ist, könnte es zu Problemen beim Öffnen des Behälters 2 kommen, sodass zur Vereinfachung des Öffnungsmechanismus eine Grifflasche 17 vorgesehen ist.

Für die teilweise Entnahme von Packungsgut ist es oftmals gewünscht, eine Sollbruchstelle, siehe dazu Referenz 18 in Fig. 7, im Deckel 1 anzubringen. Fasst der Verbraucher nunmehr den Deckel 1 an der Grifflasche 17 an, so kann der Deckel partiell abgezogen werden. Insbesondere flüssiges Packungsgut ist auf diese Art in einfacher Weise zu konsumieren. Um das Anbringen der Sollbruchstelle 18 aus technischer Sicht zu vereinfachen, wird in ihrem Bereich 19 der oberflächenraue Aufdruck 10 ausgespart.

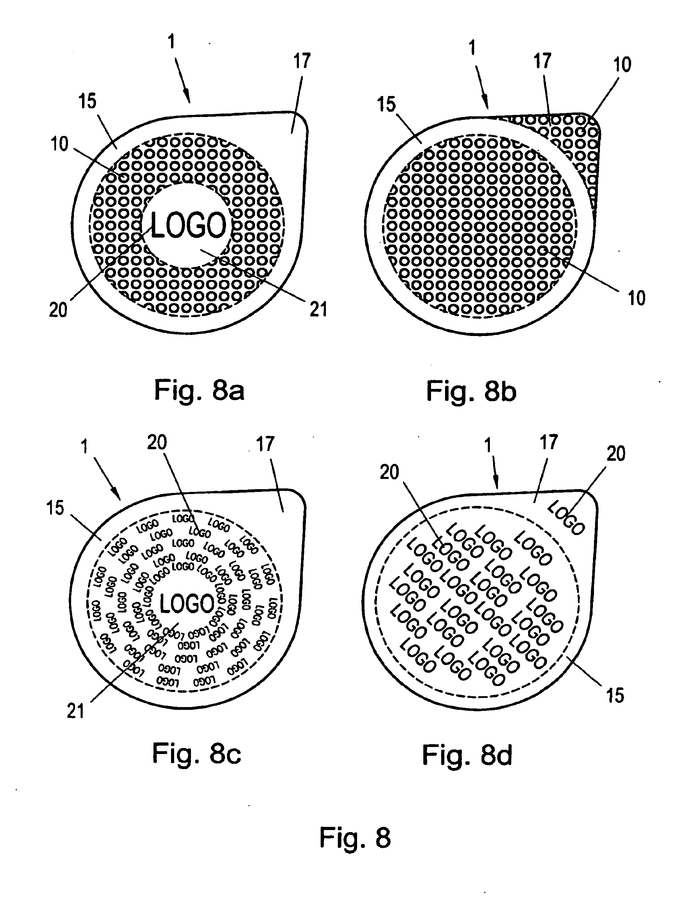

Das Aussparen der oberflächenrauen Bedruckung 5 kann jedoch nicht nur einen technischen Hintergrund, sondern oftmals auch dekorativen Hintergrund haben. Diesbezügliche Ausführungsformen sind in Fig. 8 gezeigt. Dabei ist gemäß Fig. 8a ein Deckel 1 mit einer Grifflasche 17 gezeigt, welche ebenso wie im Bereich der Siegelnaht 15 keinerlei Bedruckung aufweist. Allerdings ist mittig ein oberflächenrauer Aufdruck in Form eines Logos 20 vorgesehen. Um die Prägnanz dieses Logos 20 weiters zu unterstreichen, ist rund um dieses Logo eine Aussparung 21 im Aufdruck vorgesehen. Dadurch wird der Aufdruck in Form eines Logos markant hervorgehoben, insbesondere dann, wenn dieser mit oberflächenrauen Abstandshaltern 10 kombiniert ist. Gemäß Fig. 8b ist es vorgesehen, die Grifflasche 17 für den Verbraucher besonders signifikant darzustellen; dies erfolgt hier in Form eines zusätzlich angebrachten oberflächenrauen Aufdruckes 10. Gemäß Fig. 8c und Fig. 8d ist ein oberflächenrauer Aufdruck in Form von Logos 20 jeweils in Großdruck oder Kleindruck vorgesehen. Die Buchstabenhöhe der Logos bewirkt hier die geforderte Oberflächenrauigkeit, um wiederum das Entstapeln für den Verbraucher zu erleichtern. Gleichzeitig wird durch den Buchstabendruck dem Deckel 1 ein informeller Charakter verliehen.

Zusammenfassend kann gesagt werden, dass durch den erfindungsgemäßen Deckel 1 dem Wunsch des Verbrauchers nachgekommen wird, anstelle einer Heißsiegellackbeschichtung eine siegelfähige Coextrusionsbeschichtung zu verwenden, jedoch gleichzeitig den Abpackprozess insofern zu erleichtern, dass das Entstapeln der Deckel, bedingt durch die oberflächenraue Bedruckung, zügig verläuft. Die Auswahl dieser oberflächenrauen Bedruckung 5 kann vielfach variiert werden, wie dies anhand von Abstandshaltern 10 in Form eines Punktelackes gezeigt wurde. Gleichzeitig ist es möglich, der oberflächenrauen Bedruckung 5 ebenso informellen Charakter zu verleihen, was insbesondere dann gelingt, wenn ein oberflächenrauer Buchstabendruck in Form von Logos 20 ausgewählt wird.

## Patentansprüche

1. Deckel (1) zum Verschließen von Behältern (2) mittels einer Siegelnaht (16), wobei der Deckel (1) ein Trägermaterial (3), eine mit Bezug auf den Behälter (2) nach außen weisende oberflächenraue Bedruckung (5) sowie eine mit Bezug auf den Behälter (2) nach innen weisende Siegelschicht (7), welche eine Coextrusionsbeschichtung ist, umfasst, **dadurch gekennzeichnet, dass** die oberflächenraue Bedruckung (5) eine Rautiefe von 1 bis 100 µm aufweist und durch zusätzliches Bedrucken eines glatten Drucklackes (9) gebildet ist, und dass ein auf dem Trägermaterial (3) aufgebrachter Druckvorlack (8) die ausreichende Haftung zwischen dem Trägermaterial (3) und dem Drucklack (9) gewährleistet.

2. Deckel nach Anspruch 1, **dadurch gekennzeichnet, dass** die zusätzliche Bedruckung in Form von geometrisch angeordneten Abstandshaltern (10) oder Abstandshaltergruppen (12) vorliegt.

3. Deckel nach Anspruch 1, **dadurch gekennzeichnet, dass** die zusätzliche Bedruckung in Form von Rastern (13) oder Buchstaben in Form von Logos (20) vorliegt.

4. Deckel nach Anspruch 2 oder 3, **dadurch gekennzeichnet, dass** die Oberflächenrauigkeit in einem Bereich von vorzugsweise 20 bis 50 µm liegt.

5. Deckel nach einem der Ansprüche 1 bis 4, **dadurch gekennzeichnet, dass** die oberflächenraue Bedruckung vollflächig vorliegt.

6. Deckel nach einem der Ansprüche 1 bis 4, **dadurch gekennzeichnet, dass** die oberflächenraue Bedruckung in zumindest einem Bereich ausgespart ist.

7. Deckel nach Anspruch 6, **dadurch gekennzeichnet, dass** ein ausgesparter Bereich (15) um die Siegelnaht (16) angeordnet ist.

8. Deckel nach Anspruch 6, **dadurch gekennzeichnet, dass** ein ausgesparter Bereich (19) um die Sollbruchstelle (18) angeordnet ist.

9. Deckel nach Anspruch 6, **dadurch gekennzeichnet, dass** ein ausgesparter Bereich (21) um den Buchstabendruck (20) angeordnet ist.

10. Deckel nach einem der Ansprüche 1 bis 9, **dadurch gekennzeichnet, dass** das Trägermaterial (3) aus Aluminium, Papier sowie Kunststoff, vorzugsweise solchen auf Basis von Polypropylen, Polyethylen, Polyamid oder Polyethylenterephthalat besteht.

11. Deckel nach einem der Ansprüche 1 bis 9, **dadurch gekennzeichnet, dass** das Trägermaterial (3) aus Folienverbunden mit folgender Materialkombination ausgehend vom Behälter besteht:
Aluminium/Aluminium,
Aluminium/Kunststoff,
Kunststoff/Aluminium,
Kunststoff/Kunststoff,
Aluminium/Papier,
Papier/Aluminium,
Papier/Papier.

12. Deckel nach einem der Ansprüche 1 bis 11, **dadurch gekennzeichnet, dass** die Coextrusionsbeschichtung (4) eine Haftvermittlerschicht (6) sowie eine Siegelschicht (7) umfasst.

13. Deckel nach Anspruch 12, **dadurch gekennzeichnet, dass** die Siegelschicht (7) aus thermoplastischen Kunststoffen, ausgewählt aus der Gruppe der Polyolefine, vorzugsweise Polyethylene oder Polypropylene, Co- oder Terpolymere des Ethylen oder Polyester oder Polystyrole oder Polyamide oder deren Co- oder Terpolymere, besteht.

14. Deckel nach Anspruch 12, **dadurch gekennzeichnet, dass** die Haftvermittlerschicht (6) ein Flächengewicht von zumindest 2 g/m² aufweist.

15. Deckel nach Anspruch 12, **dadurch gekennzeichnet, dass** die Siegelschicht (7) ein Flächengewicht von zumindest 5 g/m² aufweist.

## Claims

1. A lid (1) for closing containers (2) by means of a sealing seam (16), the lid (1) comprising a carrier material (3) and a rough-surfaced printed portion (5) which faces outwards and a sealing layer (7) which faces inwards relative to the container (2), which is a co-extrusion coating, **characterised in that** the rough-surfaced printed portion (5) has a roughness depth of 1 to 100 µm and is formed by the additional printing of a smooth printing varnish (9), and **in that** a printing varnish primer (8) applied to the carrier material (3) ensures sufficient adhesion between the carrier material (3) and the printing varnish (9).

2. The lid according to Claim 1, **characterised in that** the additional printed portion is in the form of geometrically arranged spacers (10) or groups of spacers (12).

3. The lid according to Claim 1, **characterised in that** the additional printed portion is in the form of grid patterns (13) or letters in the form of logos (20).

4. The lid according to Claim 2 or 3, **characterised in that** the surface roughness is in a range of preferably 20 to 50 µm.

5. The lid according to one of Claims 1 to 4, **characterised in that** the rough-surface printed portion covers the entire surface.

6. The lid according to one of Claims 1 to 4, **characterised in that** the rough-surface printed portion is left blank in at least one region.

7. The lid according to Claim 6, **characterised in that** one blank region (15) is arranged around the sealing seam (16).

8. The lid according to Claim 6, **characterised in that** one blank region (19) is arranged around the predetermined breaking point (18).

9. The lid according to Claim 6, **characterised in that** one blank region (21) is arranged around the printed letters (20).

10. The lid according to one of Claims 1 to 9, **characterised in that** the carrier material (3) consists of aluminium, paper as well as plastics, preferably those based on polypropylenes, polyethylenes, polyamides or polyethylene terephthalate.

11. The lid according to one of Claims 1 to 9, **characterised in that** the carrier material (3) consists of film composites comprising the following material combination, proceeding from the container:
aluminium/aluminium,
aluminium/plastics,
plastics/aluminium,
plastics/plastics,
aluminium/paper,
paper/aluminium,
paper/paper.

12. The lid according to one of Claims 1 to 11, **characterised in that** the co-extrusion coating (4) comprises an adhesion promoting layer (6) as well as a sealing layer 7.

13. The lid according to Claim 12, **characterised in that** the sealing layer (7) consists of thermoplastic synthetic material, selected from the group of polyolefins, preferably polyethylenes or polypropylenes, copolymers or terpolymers of ethylene or polyesters or polystyrenes or polyamides or the copolymers or terpolymers thereof.

14. The lid according to Claim 12, **characterised in that** the adhesion promoting layer 6 has a mass per unit area of at least 2 g/m².

15. The lid according to Claim 12, **characterised in that** the sealing layer 7 has a mass per unit area of at least 5 g/m².

## Revendications

1. Couvercle (1) destiné à la fermeture de récipients (2) au moyen d'un joint soudé (16), le couvercle (1) comprenant un matériau de support (3), une impression à surface rugueuse, orientée vers l'extérieur par rapport au récipient (2), ainsi qu'une couche de scellement (7) orientée vers l'intérieur, qui est un revêtement de coextrusion, **caractérisé en ce que** l'impression à surface rugueuse (5) présente une profondeur de rugosité comprise entre 1 et 100 µm et une laque d'impression lisse (9) est formée par une impression supplémentaire, et **en ce qu'**une pré-laque (8) appliquée sur le matériau de support (3) permet d'assurer l'adhésion nécessaire entre le matériau de support (3) et la pré-laque (9).

2. Couvercle selon la revendication 1, **caractérisé en ce que** l'impression supplémentaire est réalisée sous la forme d'espaceurs (10) ou de groupes d'espaceurs (12) disposés géométriquement.

3. Couvercle selon la revendication 1, **caractérisé en ce que** l'impression supplémentaire est réalisée sous la forme de grilles (13) ou de lettre du genre logos (20).

4. Couvercle selon l'une des revendications 2 ou 3, **caractérisé en ce que** la rugosité de surface est de préférence comprise entre 20 et 50 µm.

5. Couvercle selon l'une des revendications 1 à 4, **caractérisé en ce que** l'impression à surface rugueuse est réalisée sur la totalité de la surface.

6. Couvercle selon l'une des revendications 1 à 4, **caractérisé en ce que** l'impression à surface rugueuse est interrompue à au moins un endroit.

7. Couvercle selon la revendication 6, **caractérisé en ce qu'**une région libre (15) est située autour d'une joint soudé (16).

8. Couvercle selon la revendication 6, **caractérisé en ce qu'**une région libre (19) est située autour de la zone de rupture théorique (18).

9. Couvercle selon la revendication 6, **caractérisé en ce qu'**une région libre (21) est située autour des lettres imprimées (20).

10. Couvercle selon l'une des revendications 1 à 9, **caractérisé en ce que** le matériau de support (3) est constitué d'aluminium, de papier et de plastique, de préférence à base de polypropylène, de polyéthylène, de polyamide ou de polyéthylène téréphtalate.

11. Couvercle selon l'une des 1 à 9, **caractérisé en ce que** le matériau de support (3) est constitué de laminés, avec la combinaison de matériaux suivante en partant du récipient :
Aluminium / aliminium,
Aluminium / plastique,
Plastique / aluminium,
Plastique / plastique,
Aluminium / papier,
Papier / aluminium,
Papier / papier.

12. Couvercle selon l'une des revendications 1 à 11, **caractérisé en ce que** le revêtement de coextrusion (4) comprend une couche d'agent adhésif (6) ainsi qu'une couche de scellement (7).

13. Couvercle selon la revendication 12, **caractérisé en ce que** la couche de scellement (7) est constituée de matières thermoplastiques, sélectionnées parmi le groupe comprenant la polyoléfine, de préférence le polyéthylène ou le polypropylène, des copolymères ou des terpolymères de l'éthylène, ou le polyester ou les polystyroles ou les polyamides ou leurs copolymères ou terpolymères.

14. Couvercle selon la revendication 12, **caractérisé en ce que** la couche d'agent adhésif 6 a un poids surfacique d'au moins 2 g/m2.

15. Couvercle selon la revendication 12, **caractérisé en ce que** la couche de scellement (7) a un poids surfacique d'au moins 5 g/m2.
